# FASCICULE DE BREVET EUROPEEN

(11) **EP 0 812 714 B1**
(45) Date de publication et mention de la délivrance du brevet: **18.04.2001**
(21) Numéro de dépôt: 97109661.5
(22) Date de dépôt: 13.06.1997
(51) Int. Cl.: B60H 1/00

(54) **Dispositif de chauffage-ventilation pour l'habitacle d'un véhicule automobile**
Vorrichtung für die Heizung und/oder Lüftung eines Fahrzeuginnenraumes
Heating and/or ventilation for a motor vehicle interior

(30) Priorité: 14.06.1996 FR 9607455
(43) Date de publication de la demande: 17.12.1997
(73) Titulaire: VALEO CLIMATISATION, 78321 La Verrière (FR)
(72) Inventeur: Loup, Didier, 78310 Maurepas (FR); Casado, Sophie, 78530 Buc (FR)

(56) Documents cités:
- DE-A- 4 022 932
- DE-A- 19 515 836
- DE-C- 3 826 182
- FR-A- 1 573 588
- FR-A- 2 631 896
- FR-A- 2 735 723

## Description

L'invention concerne un dispositif de chauffage-ventilation pour l'habitacle d'un véhicule automobile.

L'invention concerne plus particulièrement un dispositif de chauffage-ventilation du type comprenant un boîtier qui délimite une entrée d'air frais, une zone de mixage en communication avec un conduit de dégivrage, avec un conduit d'aération et avec un conduit de chauffage, et des moyens pour alimenter la zone de mixage sélectivement avec de l'air froid ou réchauffé, le dispositif comprenant en outre au moins un canal d'amenée d'air frais présentant une ouverture d'entrée qui communique avec l'entrée d'air frais et une ouverture de sortie qui débouche dans une chambre de sortie communiquant avec la zone de mixage, ladite chambre de sortie alimentant le conduit d'aération et le conduit de chauffage.

Un dispositif de chauffage-ventilation de ce type est connu par la Demande de brevet français No 95 07424 au nom de la Demanderesse, et par le brevet allemand DE 19515836 (preambule de la revendication 1).

En outre, dans ce dispositif connu, le canal d'amenée d'air frais est monté pivotant dans le boîtier entre une première position extrême et une seconde position extrême de manière que l'ouverture de sortie du canal soit dirigée vers un conduit choisi parmi le conduit de dégivrage, le conduit d'aération et le conduit de chauffage.

Dans ce dispositif connu, la zone de mixage reçoit un air à température réglable qui est ensuite envoyé vers les conduits précités, c'est-à-dire le conduit de dégivrage, le conduit d'aération et le conduit de chauffage.

Le conduit de dégivrage est propre à envoyer un flux d'air vers au moins une buse dirigée vers au moins une des vitres du véhicule, notamment le pare-brise. Le conduit d'aération est propre à diriger un flux d'air vers la tête des passagers, par l'intermédiaire d'aérateurs prévus sur la planche de bord du véhicule. Enfin, le conduit de chauffage, encore appelé "conduit-pieds", est propre à envoyer un flux d'air vers les pieds des passagers, par l'intermédiaire d'au moins une buse débouchant vers le bas de l'habitacle.

Dans le dispositif connu par la Demande de brevet français No 95 07424, des moyens d'actionnement sont prévus pour commander le pivotement du canal d'amenée d'air frais entre ses deux positions extrêmes.

On peut ainsi diriger sélectivement le flux d'air frais issu de l'ouverture de sortie du canal d'amenée d'air frais, soit vers le conduit de dégivrage, soit vers le conduit d'aération, soit vers le conduit de chauffage, en fonction de la configuration aérothermique souhaitée par l'utilisateur.

Le conduit ainsi choisi est alors alimenté par un flux d'air frais issu du canal d'amenée d'air frais qui se mélange à l'air mixé provenant de la zone de mixage, ce qui permet d'obtenir un flux d'air à température intermédiaire.

Toutefois, il a été constaté que le canal d'amenée d'air frais selon la Demande de brevet français précitée a tendance à canaliser le flux d'air frais, ce qui ne permet pas d'obtenir un mélange optimal du flux d'air frais et du flux d'air mixé.

L'invention a notamment pour but de surmonter cet inconvénient en favorisant le mélange du flux d'air frais issu du canal d'amenée d'air frais et du flux d'air mixé.

L'invention propose à cet effet un dispositif de chauffage-ventilation du type défini en introduction, dans lequel le canal d'amenée d'air frais loge intérieurement des parois déflectrices propres à modifier l'écoulement d'un flux d'air frais dans ledit canal et favoriser le mélange de ce flux d'air frais avec un flux d'air mixé à la sortie dudit canal.

Ainsi, ces parois déflectrices permettent de diviser le flux d'air frais en plusieurs flux secondaires qui peuvent s'écarter plus ou moins les uns des autres en créant des remous ou turbulences favorisant le mélange des flux secondaires d'air frais avec le flux d'air mixé.

Dans une forme de réalisation préférée de l'invention, le canal d'amenée d'air frais est limité par une paroi inférieure, une paroi supérieure opposée à la paroi inférieure, et deux parois latérales opposées, pour définir une section transversale interne de forme sensiblement rectangulaire, les parois déflectrices s'étendant entre deux parois opposées dudit canal.

De façon préférentielle, ces parois déflectrices s'étendent entre la paroi inférieure et la paroi supérieure.

De façon avantageuse, ces aubes déflectrices s'étendent dans la région de l'ouverture de sortie du canal d'amenée d'air frais.

Avantageusement, les parois déflectrices forment un angle aigu avec l'axe médian que définit le canal d'amenée d'air frais. Cet angle aigu est avantageusement compris entre 10 et 30°.

Dans une forme de réalisation préférée de l'invention, le dispositif comprend deux parois déflectrices centrales disposées symétriquement par rapport à un plan de symétrie du canal d'amenée d'air frais, ces parois déflectrices centrales étant reliées à une arête commune dans le plan de symétrie, et allant en s'évasant vers l'ouverture de sortie.

Avantageusement, le dispositif comprend en outre au moins une paire de parois déflectrices intermédiaires disposées symétriquement par rapport au plan de symétrie et placées chacune entre une paroi déflectrice centrale et une paroi latérale du boîtier.

Les parois latérales du boîtier comprennent avantageusement des parties terminales qui vont en s'écartant ou s'évasant dans la direction de l'ouverture de sortie du canal d'amenée d'air frais.

Dans l'invention, le canal d'amenée d'air frais est avantageusement réalisé sous la forme d'un boîtier ouvert à deux extrémités, ce boîtier étant muni d'une première patte extérieure propre à être traversée par un axe pour le pivotement du boîtier.

Avantageusement, le canal est muni d'une seconde patte extérieure propre à être reliée à des moyens d'actionnement pour commander le pivotement du canal d'amenée d'air frais entre ses deux positions extrêmes.

La première patte extérieure et la deuxième patte extérieure dépendent avantageusement d'une même paroi, par exemple la paroi supérieure, du canal d'amenée d'air frais.

Dans une forme de réalisation préférée de l'invention, le canal d'amenée d'air frais est monté pivotant dans le boîtier entre une première position extrême et une seconde position extrême de manière que l'ouverture de sortie du canal soit dirigée vers un conduit choisi parmi le conduit de dégivrage, le conduit d'aération et le conduit de chauffage.

Toutefois, l'invention peut s'appliquer également au cas où le canal d'amenée d'air frais est monté fixe dans le boîtier.

Dans la description qui suit, faite seulement à titre d'exemple, on se réfère aux dessins annexés, sur lesquels :
- la figure 1 est une vue en coupe transversale d'un dispositif de chauffage-ventilation selon l'invention;
- la figure 2 est une vue en perspective du canal d'amenée d'air frais du dispositif de la figure 1;
- la figure 3 est une vue de côté du canal d'amenée d'air frais;
- la figure 4 est une vue du canal d'amenée d'air frais, dans la direction de la flèche IV de la figure 3;
- la figure 5 est une vue du canal d'amenée d'air frais, dans la direction de la flèche V de la figure 3;
- la figure 6 est une vue de dessous du canal d'amenée d'air frais de la figure 2;
- la figure 7 est une vue en coupe selon la ligne VII-VII de la figure 6; et
- la figure 8 est une vue en coupe selon la ligne VIII-VIII de la figure 7.

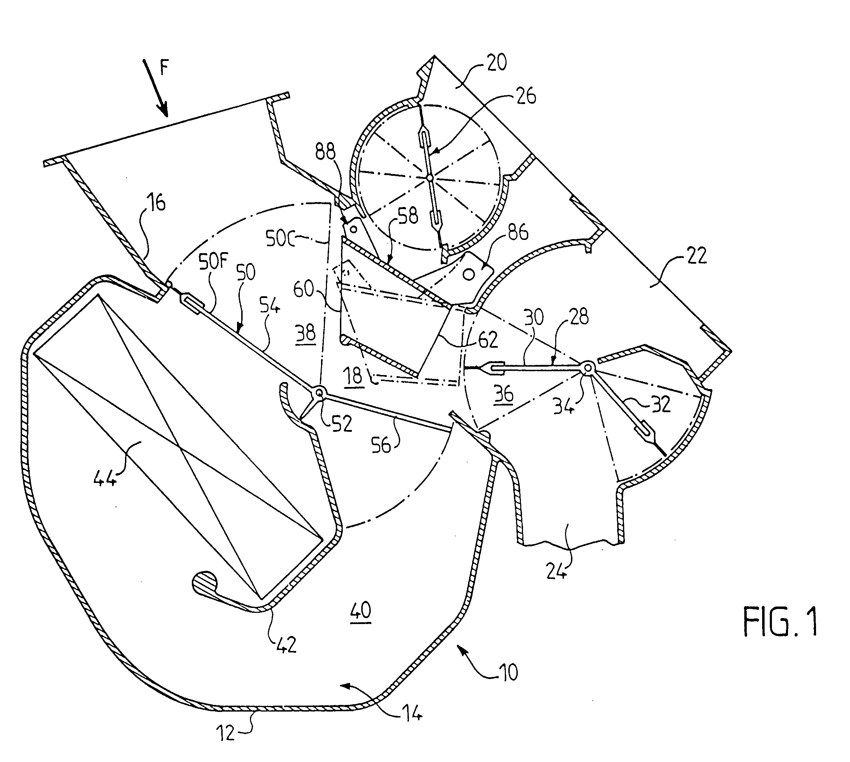

Le dispositif de chauffage-ventilation de la figure 1 comprend un boîtier 10 délimité principalement par une paroi 12 dont les génératrices sont parallèles entre elles et perpendiculaires au plan de la feuille, ainsi que par deux parois latérales 14 (dont une seule est visible sur la figure 1). Une entrée d'air frais 16 est délimitée dans le boîtier pour y amener (flèche F) un flux d'air pulsé, éventuellement climatisé, qui provient de l'extérieur de l'habitacle du véhicule ou qui est recirculé à partir de celui-ci.

Le boîtier 10 délimite en outre une chambre de mixage 18 qui est en communication avec un conduit de dégivrage 20, un conduit d'aération 22 et un conduit de chauffage 24.

Le conduit de dégivrage 20 est contrôlé par un volet pivotant 26 et est propre à envoyer de l'air frais ou réchauffé vers au moins une buse (non représentée) située à proximité d'une vitre du véhicule, notamment du pare-brise.

Le conduit d'aération 22 est propre à envoyer un flux d'air frais ou réchauffé vers au moins un aérateur (non représenté) situé notamment sur la planche de bord du véhicule.

Le conduit de chauffage 24 (encore appelé "conduit-pieds") est propre à envoyer un flux d'air frais ou réchauffé vers au moins une buse (non représentée) située en partie inférieure de l'habitacle pour diriger cet air vers les pieds des passagers.

Les conduits 22 et 24 sont contrôlés par un volet de réglage commun 28 comprenant deux parties 30 et 32 reliées à un axe 34 en formant entre elles un angle d'environ 120°. Le volet 28 est propre à se déplacer à l'intérieur d'une chambre 36 de forme générale cylindrique qui communique avec la zone de mixage 18 et qui est propre à alimenter les conduits 22 et 24.

Le dispositif 10 délimite en outre une branche de transmission d'air frais 38 interposée entre l'entrée d'air frais 16 et la zone de mixage 18, ainsi qu'une branche de réchauffage d'air 40 qui a sensiblement la forme d'un U et qui communique, d'une part avec l'entrée d'air 16, et d'autre part avec la zone de mixage 18.

La forme en U de la branche 40 est délimitée par une partie de la paroi 12 et par une paroi interne 42. Dans la branche de réchauffage d'air 40 est logé un échangeur de chaleur 44 muni de deux tubulures (non représentées) servant respectivement à l'admission et à l'évacuation d'un fluide chaud, avantageusement le fluide de refroidissement du moteur du véhicule.

A la jonction entre les deux branches 38 et 40 est prévu un volet de mixage 50 monté à pivotement autour d'un axe 52 et formé de deux parties 54 et 56 s'étendant de part et d'autre de cet axe.

Le volet 50 peut prendre une première position extrême 50C ou "position chaud" (représentée en trait interrompu), dans laquelle tout le flux d'air passe par la chambre de réchauffage d'air 40, et donc par l'échangeur de chaleur 44 en y étant réchauffé. Il peut prendre également une seconde position extrême 50F ou "position froid" (représentée en trait plein) dans laquelle tout le flux d'air passe par la branche de transmission d'air frais 38 sans traverser l'échangeur de chaleur 44.

Le volet de mixage 50 peut en outre prendre toute position intermédiaire entre les positions 50C et 50F pour répartir le flux d'air entre les deux branches et régler ainsi la température de l'air qui parvient à la zone de mixage 18 et qui est ensuite distribué entre les conduits 20, 22 et 24.

Le volet 26 est représenté dans une position de fermeture, tandis que le volet 28 est représenté dans une position dite "aération-pieds" dans laquelle le flux d'air provenant de la zone de mixage 18 pénètre dans la chambre 36 en se partageant en deux flux : un flux dirigé vers le conduit d'aération 22 et un flux dirigé vers le conduit de chauffage 24.

Sur la figure 1, on a également représenté en trait interrompu deux autres positions du volet 28, à savoir une position "aération" dans laquelle tout le flux d'air est dirigé vers le conduit d'aération 22, et une position "pieds" dans laquelle tout le flux d'air est dirigé vers le conduit de chauffage 24.

Le dispositif comprend en outre un canal d'amenée d'air frais 58 qui est logé dans le boîtier 10 et qui présente une ouverture d'entrée 60 communiquant avec l'entrée d'air frais 16 et une ouverture de sortie 62 débouchant vers la chambre de sortie 36 qui alimente les conduits 22 et 24.

Le canal d'amenée d'air frais 58 est monté pivotant dans le boîtier 10. L'entrée 60 dudit canal 58 est située près de l'entrée 16, dans la zone d'évolution du volet de mixage 50, de manière à être fermée lorsque le volet de mixage est dans la position 50C. Ce canal peut pivoter entre deux positions extrêmes de manière que son ouverture de sortie 62 soit dirigée vers un conduit choisi parmi le conduit de dégivrage 20, le conduit d'aération 22 et le conduit de chauffage 24.

Le dispositif tel que décrit jusqu'à présent est de structure en elle-même connue d'après la Demande de brevet français No 95 07424 déjà citée.

L'invention vise à améliorer la structure du canal 58 pour améliorer le mélange du flux d'air frais issu dudit canal et d'un flux d'air mixé.

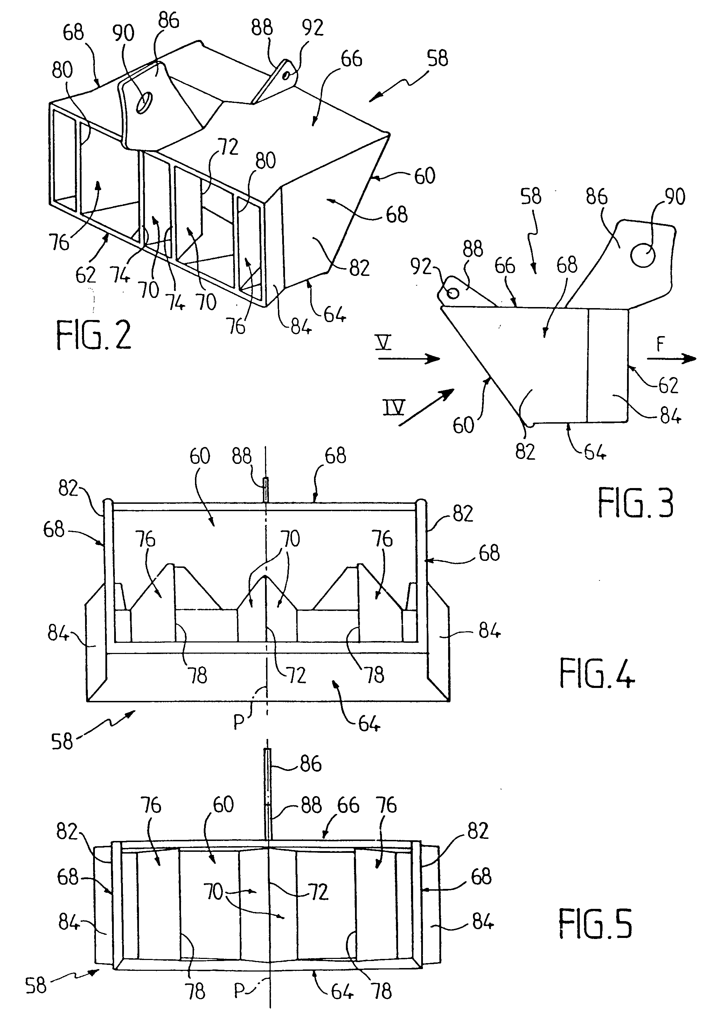

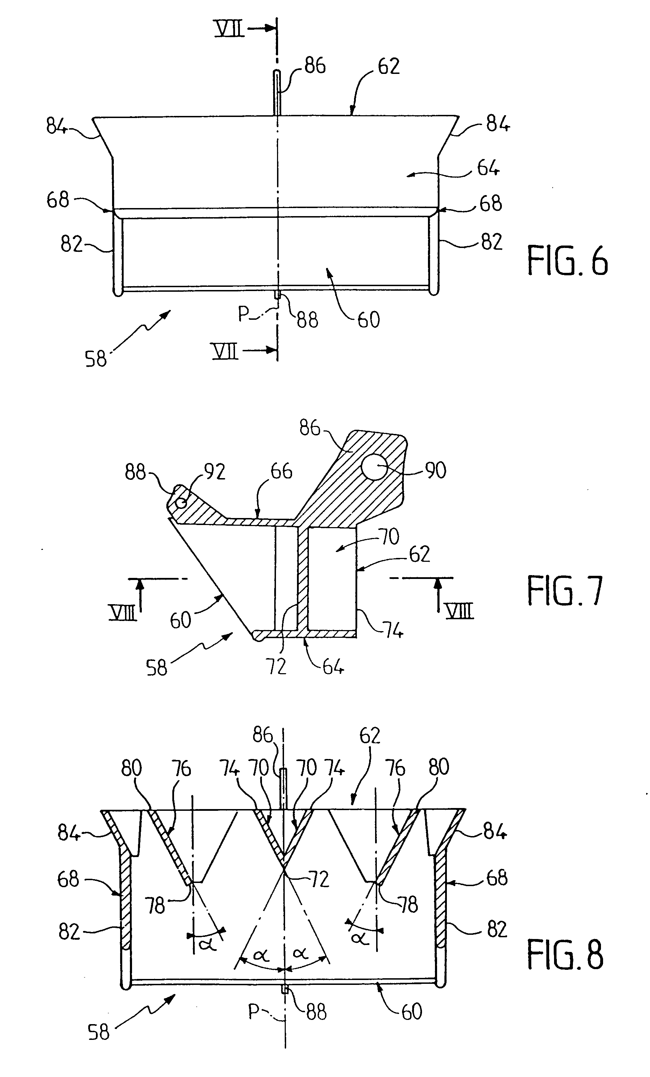

Le canal d'amenée d'air frais 58 (figures 2 à 5) est limité par une paroi inférieure 64, une paroi supérieure 66 opposée à la paroi 64, et deux parois latérales opposées 68 pour définir une section transversale intérieure de forme sensiblement rectangulaire. Le canal 58 affecte ainsi la forme d'un boîtier ouvert à ses deux extrémités (ouvertures 60 et 62).

La paroi inférieure 64 et la paroi supérieure 66 sont sensiblement parallèles entre elles. Comme on le voit notamment sur les figures 2 et 3, l'ouverture d'entrée 60 s'étend obliquement par rapport aux parois 64 et 66, tandis que l'ouverture de sortie 62 s'étend dans une direction généralement perpendiculaire aux parois 64 et 66.

Le canal 68 possède un plan de symétrie P (figures 4, 5, 6 et 8) qui s'étend à mi-distance des parois latérales 68 parallèlement à la direction d'écoulement du flux d'air F dans ledit canal.

Le canal 58 loge intérieurement des parois déflectrices propres à modifier l'écoulement du flux d'air F. Ces aubes directrices comprennent tout d'abord deux parois déflectrices centrales 70 (figure 2, 4, 5 et 8) qui s'étendent entre la paroi inférieure 64 et la paroi supérieure 66. Ces parois déflectrices 70 sont disposées symétriquement par rapport au plan de symétrie P du canal 68. Elles sont reliées à une arête commune 72 qui est située à distance de l'ouverture d'entrée 60 et elles se terminent chacune par une arête 74 qui s'étend dans le plan défini par l'ouverture de sortie 62. Chacune des parois déflectrices centrales 70 forme un angle aigu α par rapport à l'axe médian (plan de symétrie P) que définit le canal 58 (figure 8). Cet angle α est compris entre 10 et 30° et est dans l'exemple voisin de 25°.

Le canal 58 loge en outre deux parois déflectrices intermédiaires 76 disposées symétriquement par rapport au plan P et placées chacune entre une paroi déflectrice centrale 70 et une paroi latérale 68 du boîtier.

Chacune des parois déflectrices 76 forme également un angle α avec l'axe médian du canal et elle s'étend donc dans une direction sensiblement parallèle à l'aube directrice centrale 70 qui lui est adjacente (figure 8).

Chacune des parois déflectrices intermédiaires 76 comprend une première arête 78 située à distance de la face d'entrée 60 et une seconde arête 80 située dans le plan de l'ouverture de sortie 62.

Par ailleurs, chacune des parois latérales 68 comprend une première partie 82 qui s'étend à partir de la face d'entrée 60 dans une direction parallèle au plan médian P, puis une seconde partie terminale évasée 84 (figures 2 à 6 et 8). Les parties terminales 84 vont en s'écartant ou s'évasant l'une de l'autre dans la direction de l'ouverture de sortie 62 du canal. Chacune des parties terminales 84 est sensiblement parallèle à la paroi déflectrice intermédiaire 76 qui lui est adjacente.

Les parois déflectrices 70 et 76 ainsi que les parties évasées 84 du canal 58 permettent de diviser le flux d'air frais F en des flux secondaires divergents, ce qui permet la création de tourbillons ou de remous favorisant le mélange du flux d'air frais avec le mélange du flux d'air mixé.

De la paroi supérieure 66 du canal 58 dépend une première patte 88 (figures 2, 3 et 5 à 8) qui comporte un trou 90 (figures 2, 3 et 7) propre à coopérer avec un arbre approprié (non représenté) pour permettre le pivotement du canal 58 à l'intérieur du boîtier 10 entre ses deux positions extrêmes.

Par ailleurs, de la paroi supérieure 66 dépend une autre patte 88 (figures 2, 3 et 5 à 8) munie d'un trou 92 et propre à être reliée à des moyens d'actionnement (non représentés) pour commander le pivotement du canal 58 entre ses deux positions extrêmes.

Le canal 58 peut ainsi pivoter entre une première position extrême (représentée en trait plein sur la figure 1) dans laquelle l'ouverture de sortie 62 est dirigée vers le conduit d'aération 22 et une seconde position extrême (représentée en trait interrompu sur la figure 1) dans laquelle l'ouverture de sortie 62 est dirigée vers le conduit de chauffage 24.

L'amplitude du pivotement du canal 58 est de l'ordre de 15 à 20°. Normalement, le canal peut être seulement placé dans l'une ou l'autre des deux positions extrêmes précitées, bien qu'il entre également dans le cadre de l'invention de prévoir une variante dans laquelle ce canal pourrait prendre au moins une position intermédiaire.

Les moyens d'actionnement du canal sont opératoires pour ne faire pivoter le canal que lorsque le volet 28 est dans sa position "aération-pieds" telle que représentée en trait plein sur la figure 1. Dans cette position, à la fois le conduit d'aération 22 et le conduit de chauffage 24 sont alimentés en air mixé. On peut alors diriger l'ouverture de sortie du canal 58, soit vers le conduit d'aération 22, soit vers le conduit de chauffage 24. Dans le premier cas, les aérateurs reçoivent un air à température plus basse que les buses de sortie pieds. Dans le second cas, c'est la situation inverse qui est obtenue.

Les moyens d'actionnement couplés au canal d'amenée d'air frais 58 sont opératoires pour faire pivoter ce canal lorsque le volet de dégivrage 26 est dans une position de fermeture, comme montré à la figure 1.

Par contre, lorsque le volet de dégivrage 26 ouvre le conduit de dégivrage 20, le canal d'amenée d'air frais 58 ne peut pivoter et reste alors bloqué dans sa première position extrême, c'est-à-dire celle dans laquelle l'ouverture de sortie 62 est dirigée vers le conduit d'aération 22.

Bien entendu, l'invention n'est pas limitée à la forme de réalisation décrite précédemment à titre d'exemple et est susceptible de nombreuses variantes, notamment en ce qui concerne la structure et le nombre des parois déflectrices présentes dans le canal d'amenée d'air frais.

De plus, le canal d'amenée d'air frais peut être monté fixe dans le boîtier.

## Revendications

1. Dispositif de chauffage-ventilation de l'habitacle d'un véhicule automobile, comprenant un boîtier (10) qui délimite une entrée d'air frais (16), une zone de mixage (18) en communication avec un conduit de dégivrage (20), avec un conduit d'aération (22) et avec un conduit de chauffage (24), et des moyens (44, 50) pour alimenter la zone de mixage (18) sélectivement avec de l'air froid ou réchauffé, le dispositif comprenant en outre au moins un canal d'amenée d'air frais (58) présentant une ouverture d'entrée (60) qui communique avec l'entrée d'air frais (16) et une ouverture de sortie (62) qui débouche dans une chambre de sortie (36) communiquant avec la zone de mixage (18), ladite chambre de sortie (36) alimentant le conduit d'aération (22) et le conduit de chauffage (24),
caractérisé en ce que le canal d'amenée d'air frais (58) loge intérieurement des parois déflectrices (70, 76) propres à modifier l'écoulement d'un flux d'air frais (F) dans ledit canal et favoriser le mélange de ce flux d'air frais avec un flux d'air mixé, à la sortie dudit canal.

2. Dispositif selon la revendication 1, caractérisé en ce que le canal d'amenée d'air frais (58) est limité par une paroi inférieure (64), une paroi supérieure (66) opposée à la paroi inférieure, et deux parois latérales opposées (68), pour définir une section transversale interne de forme sensiblement rectangulaire, et en ce que les parois déflectrices (70, 76) s'étendent entre deux parois opposées (64, 66) dudit canal (58).

3. Dispositif selon la revendication 2, caractérisé en ce que les parois déflectrices (70, 76) s'étendent entre la paroi inférieure (64) et la paroi supérieure (66).

4. Dispositif selon l'une des revendications 1 à 3, caractérisé en ce que les parois déflectrices (70, 76) s'étendent dans la région de l'ouverture de sortie (62) du canal d'amenée d'air frais (58).

5. Dispositif selon l'une des revendications 1 à 4, caractérisé en ce que les parois déflectrices (70, 76) forment un angle aigu (α) avec l'axe médian que définit le canal d'amenée d'air frais (58).

6. Dispositif selon la revendication 5, caractérisé en ce que l'angle aigu (α) est compris entre 10 et 30°.

7. Dispositif selon l'une des revendications 1 à 6, caractérisé en ce qu'il comprend deux parois déflectrices centrales (70) disposées symétriquement par rapport à un plan de symétrie (P) du canal d'amenée d'air frais (58), reliées à une arête commune (72) dans le plan de symétrie, et allant en s'évasant vers l'ouverture de sortie (62).

8. Dispositif selon l'une des revendications 1 à 7, caractérisé en ce qu'il comprend au moins une paire de parois déflectrices intermédiaires (76) disposées symétriquement par rapport au plan de symétrie (P) et placées chacune entre une paroi déflectrice centrale (70) et une paroi latérale (68) du canal d'amenée d'air frais (58).

9. Dispositif selon l'une des revendications 1 à 8, caractérisé en ce que les parois latérales (68) du canal d'amenée d'air frais (58) ont des parties terminales (84) qui vont en s'écartant ou s'évasant dans la direction de l'ouverture de sortie (62) du canal.

10. Dispositif selon l'une des revendications 1 à 9, caractérisé en ce que le canal d'amenée d'air frais (58) est réalisé sous la forme d'un boîtier ouvert à deux extrémités et est muni d'une première patte extérieure (86) propre à être traversée par un axe pour le pivotement du boîtier.

11. Dispositif selon la revendication 10, caractérisé en ce que le canal d'amenée d'air frais (58) est muni d'une deuxième patte extérieure (88) propre à être reliée à des moyens d'actionnement pour commander le pivotement du canal d'amenée d'air frais (58) entre ses deux positions extrêmes.

12. Dispositif selon les revendications 10 et 11, caractérisé en ce que la première patte extérieure (86) et la seconde patte extérieure (88) dépendent d'une même paroi (66) du canal d'amenée d'air frais (58).

13. Dispositif selon l'une des revendications 1 à 12, caractérisé en ce que le canal d'amenée d'air frais (58) est monté pivotant dans le boîtier (10) entre une première position extrême et une seconde position extrême de manière que l'ouverture de sortie (62) du canal (58) soit dirigée vers un conduit choisi parmi le conduit de dégivrage (20), le conduit d'aération (22) et le conduit de chauffage (24).

## Patentansprüche

1. Kraftfahrzeuginnenraum-Heiz-Belüftungsanlage, umfassend ein einen Frischlufteintritt (16) begrenzendes Gehäuse (10), eine Mischzone (18), die mit einem Entfrostungskanal (20), einem Belüftungskanal (22) und einem Heizkanal (24) in Verbindung steht, sowie Mittel (44, 50), um die Mischzone (18) selektiv mit kalter oder erwärmter Luft zu versorgen, wobei die Anlage ferner zumindest einen Frischluftzufuhrkanal (58) umfasst, welcher eine Eintrittsöffnung (60) aufweist, die mit dem Frischlufteintritt (16) in Verbindung steht, sowie eine Austrittsöffnung (62), die in eine Austrittskammer (36) mündet, die mit der Mischzone (18) in Verbindung steht, wobei die Austrittskammer (36) den Belüftungskanal (22) und den Heizkanal (24) versorgt, dadurch gekennzeichnet, dass der Frischluftzufuhrkanal (58) innerlich Deflektorwandungen (70, 76) enthält, die die Strömung eines Frischluftflusses (F) in dem Kanal verändern können und die Vermengung dieses Frischluftflusses mit einem Mischluftfluß am Austritt des Kanals unterstützen können.

2. Anlage nach Anspruch 1, dadurch gekennzeichnet, dass der Frischluftzufuhrkanal (58) begrenzt ist durch eine untere Wandung (64), eine obere Wandung (66), gegenüberstehend der unteren Wandung, sowie durch zwei einander gegenüberstehende Lateralwandungen (68), um einen Innenquerschnitt von im wesentlichen rechteckiger Form zu definieren, und dass sich die Deflektor- oder Umlenkwandungen (70, 76) zwischen einander gegenüberstehenden Wandungen (64, 66) des Kanales (58) erstrekken.

3. Anlage nach Anspruch 2, dadurch gekennzeichnet, dass die Deflektorwandungen (70, 76) sich zwischen der unteren Wandung (64) und der oberen Wandung (66) erstrekken.

4. Anlage nach einem der Ansprüche 1 bis 3, dadurch gekennzeichnet, dass die Deflektorwandungen (70, 76) sich in dem Bereich der Austrittsöffnung (62) des Frischluftzufuhrkanals (58) erstrecken.

5. Anlage nach einem der Ansprüche 1 bis 4, dadurch gekennzeichnet, dass die Deflektorwandungen (70, 76) einen spitzen Winkel (α) mit der Mittelachse bilden, die der Frischluftzufuhrkanal (58) definiert.

6. Anlage nach Anspruch 5, dadurch gekennzeichnet, dass der spitze Winkel (α) enthalten ist zwischen 10° und 30°.

7. Anlage nach einem der Ansprüche 1 bis 6, dadurch gekennzeichnet, dass sie zwei mittlere Deflektorwandungen (70) umfasst, symmetrisch angeordnet mit Bezug auf eine Symmetrieebene (P) des Frischluftzufuhrkanals (58), verbunden mit einem gemeinsamen Grat (72) in der Symmetrieebene und unter Ausweitung hin zu der Austrittsöffnung (62) verlaufend.

8. Anlage nach einem der Ansprüche 1 bis 7, dadurch gekennzeichnet, dass sie zumindest ein Paar an zwischengelagerten Deflektorwandungen (76) umfasst, angeordnet symmetrisch mit Bezug auf die Symmetrieebene (P) und jeweils angeordnet zwischen einer mittleren Deflektorwandung (70) und einer Lateralwandung (68) des Frischluftzufuhrkanals (58).

9. Anlage nach einem der Ansprüche 1 bis 8, dadurch gekennzeichnet, dass die Lateralwandungen (68) des Frischluftzufuhrkanals (58) Endabschnitte (84) aufweisen, die divergieren oder unter Ausweitung in der Richtung der Austrittsöffnung (62) des Kanals verlaufen.

10. Anlage nach einem der Ansprüche 1 bis 9, dadurch gekennzeichnet, dass der Frischluftzufuhrkanal (58) in der Form eines an beiden Enden offenen Gehäuses ausgebildet ist und mit einer ersten Außenlasche (86) versehen ist, die von einer Achse zum Schwenken des Gehäuses durchquert werden kann.

11. Anlage nach Anspruch 10, dadurch gekennzeichnet, dass der Frischluftzufuhrkanal (58) mit einer zweiten Außenlasche (88) versehen ist, die mit einer Betätigungseinrichtung verbunden werden kann, um das Verschwenken des Frischluftzufuhrkanals (58) zwischen seinen zwei Endpositionen zu steuern.

12. Anlage nach den Ansprüchen 10 und 11, dadurch gekennzeichnet, dass die erste äußere Lasche (86) und die zweite äußere Lasche (88) von ein und derselben Wandung (66) des Frischluftzufuhrkanals (58) abhängen.

13. Anlage nach einem der Ansprüche 1 bis 12, dadurch gekennzeichnet, dass der Frischluftzufuhrkanal (58) schwenkbar in dem Gehäuse (10) zwischen einer ersten Endposition und einer zweiten Endposition montiert ist, so dass die Austrittsöffnung (62) des Kanals (58) zu einem gewählten Kanal, ausgewählt unter dem Entfrostungskanal (20), dem Belüftungskanal (22) und dem Heizkanal (24) gerichtet wird.

## Claims

1. Device for heating/ventilating the passenger compartment of a motor vehicle, comprising a casing (10) which delimits a fresh-air inlet (16), a mixing region (18) in communication with a de-icing duct (20), with an aeration duct (22) and with a heating duct (24), and means (44, 50) for supplying the mixing region (18) selectively with the cold or heated air, the device further comprising at least one fresh-air intake channel (58) featuring an inlet aperture (60) which communicates with the fresh-air inlet (16) and an outlet aperture (62) which opens out into an outlet chamber (36) communicating with the mixing region (18), the said outlet chamber (36) supplying the aeration duct (22) and the heating duct (24),
characterised in that the fresh-air intake channel (58) internally houses deflecting walls (70, 76) able to modify the flow of a cold airflow (F) in the said channel and to promote the mixing of this fresh airflow with a mixed airflow, at the outlet of the said channel.

2. Device according to Claim 1, characterised in that the fresh-air intake channel (58) is bounded by a lower wall (64), an upper wall (66) opposite the lower wall, and two opposite sidewalls (68), so as to define an internal cross section of substantially rectangular shape, and in that the deflecting walls (70, 76) extend between two opposite walls (64, 66) of the said channel (58).

3. Device according to Claim 2, characterised in that the deflecting walls (70, 7.6) extend between the lower wall (64) and the upper wall (66).

4. Device according to one of Claims 1 to 3, characterised in that the deflecting walls (70, 76) extend in the region of the outlet aperture (62) of the fresh-air intake channel (58).

5. Device according to one of Claims 1 to 4, characterised in that the deflecting walls (70, 76) form an acute angle (α) with the median axis which the fresh-air intake channel (58) defines.

6. Device according to Claim 5, characterised in that the acute angle (α) lies between 10 and 30°.

7. Device according to one of Claims 1 to 6, characterised in that it comprises two central deflecting walls (70) arranged symmetrically with respect to a plane of symmetry (P) of the fresh-air intake channel (58), which are linked to a common ridge (72) in the plane of symmetry, and going on, widening, towards the outlet aperture (62).

8. Device according to one of Claims 1 to 7, characterised in that it comprises at least one pair of intermediate deflecting walls (76) arranged symmetrically with respect to the plane of symmetry (P) and each placed between a central deflecting wall (70) and a lateral wall (68) of the fresh-air intake channel (58).

9. Device according to one of Claims 1 to 8, characterised in that the sidewalls (68) of the fresh-air intake channel (58) have terminal parts (84) which go on, separating or widening, in the direction of the outlet aperture (62) of the channel.

10. Device according to one of Claims 1 to 9, characterised in that the fresh-air intake channel (58) is produced in the form of a casing open at two ends and is equipped with a first outer lug (86) able to be traversed by a spindle for pivoting of the casing.

11. Device according to Claim 10, characterised in that the fresh-air intake channel (58) is equipped with a second outer lug (88) able to be linked to actuating means for controlling the pivoting of the fresh-air intake channel (58) between its two extreme positions.

12. Device according to Claims 10 and 11, characterised in that the first outer lug (86) and the second outer lug (88) stem from the same wall (66) of the fresh-air intake channel (58).

13. Device according to one of Claims 1 to 12, characterised in that the fresh-air intake channel (58) is mounted pivoting in the casing (10) between a first extreme position and a second extreme position in such a way that the outlet aperture (62) of the channel (58) is directed towards a duct chosen from among the de-icing duct (20), the aeration duct (22) and the heating duct (24).
